# EUROPEAN PATENT APPLICATION

(11) **EP 4 729 318 A1**
(43) Date of publication of application: **22.04.2026**
(21) Application number: 24207291.6
(22) Date of filing: 17.10.2024
(51) Int. Cl.: B60H 1/00, B60H 1/32

(54) **A VEHICLE CAB BODY WITH INTEGRATED REFRIGERANT SYSTEM IN A REFRIGERANT BULKHEAD**

(71) Applicant: Volvo Truck Corporation, 405 08 Göteborg (SE)
(72) Inventor: GROMATZKY, Jonathan, KERNERSVILLE, 27284 (US)
(74) Representative: Kransell & Wennborg KB

(57) **Abstract**

The present disclosure relates to a vehicle cab body (20), comprising a firewall structure (30) dividing the vehicle cab body into a cabin side (40) and an engine side (50), the vehicle cab body comprising a vehicle thermal system (100), comprising a refrigerant system (200), comprising a first refrigerant circuit (202), a second refrigerant circuit (204), a third refrigerant circuit (206), a refrigerant compressor (210), and a four-way valve (212), wherein each one of the first, second and third refrigerant circuits is arranged in fluid communication with the refrigerant compressor via the four-way valve, and a refrigerant bulkhead (500) connected to the firewall structure (30), wherein the first refrigerant circuit, the second refrigerant circuit, and the third refrigerant circuit are integrated in the refrigerant bulkhead, the four-way valve (212) being mounted to the refrigerant bulkhead (500) on the engine side, and wherein the refrigerant compressor (210) is arranged external to the refrigerant bulkhead.

## Description

### TECHNICAL FIELD

The disclosure relates generally to thermal systems. In particular aspects, the disclosure relates to a vehicle cab body with integrated refrigerant system in a refrigerant bulkhead. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

As vehicle systems continues to develop, thermal management of these systems needs attention as well. For example, when changing prime mover of a vehicle from a conventional internal combustion engine to a more environmentally friendly electric machine, the demand for thermal management changes as the electric traction motor and its associated component have different desired temperature levels compared to the conventional internal combustion engine.

Hence, there is a desire to provide a vehicle thermal system that can control a relatively high number vehicle systems and positions in a relatively simple and efficient manner. In addition, the thermal system should preferably be arranged at a suitable position in a non-bulky manner.

### SUMMARY

According to a first aspect of the disclosure, there is provided a vehicle cab body, comprising a firewall structure dividing the vehicle cab body into a cabin side and an engine side, the vehicle cab body comprising a vehicle thermal system, comprising a refrigerant system, comprising a first refrigerant circuit, a second refrigerant circuit, a third refrigerant circuit, a refrigerant compressor, and a four-way valve, wherein each one of the first, second and third refrigerant circuits is arranged in fluid communication with the refrigerant compressor via the four-way valve, and a refrigerant bulkhead connected to the firewall structure, wherein the first refrigerant circuit, the second refrigerant circuit, and the third refrigerant circuit are integrated in the refrigerant bulkhead, the four-way valve being mounted to the refrigerant bulkhead on the engine side, and wherein the refrigerant compressor is arranged external to the refrigerant bulkhead.

The first aspect of the disclosure may seek to provide a vehicle cab body with a vehicle thermal system that enables for sufficient thermal control of various components and compartments of a vehicle, preferably a battery electric vehicle (BEV). A technical benefit may include that a compact thermal system is provided in the vehicle cab body, where the refrigerant bulkhead is positioned in the firewall structure. The firewall structure should be construed as, and as indicated above, a barrier that separates the cabin side from the engine side. The firewall structure thus conventionally serves as a protective barrier between these two compartments and the present disclosure is based on the insight that the refrigerant bulkhead can be suitably connected to this firewall structure. For a conventional vehicle propelled by an internal combustion engine, the firewall structure typically comprises a central access opening at which the internal combustion engine is positioned. By connecting the refrigerant bulkhead at this central position, the vehicle thermal system can be arranged at the same position for both right-hand-drive vehicles as well as for left-hand-drive vehicles.

Furthermore, by integrating the first, second and third refrigerant circuits in the refrigerant bulkhead, there is no longer a need to provide connecting hoses and routing lines that hang between the components they are connected to. Hence, complicated and difficulty attachments of such hoses and routing lines may no longer be needed. Furthermore, by arranging the refrigerant compressor external to the refrigerant bulkhead, noise and vibration in the vehicle cab body can be reduced. Hence, any vibrations caused by the refrigerant compressor do not propagate into the firewall structure, thereby reducing noise and vibration in the cabin.

Moreover, by arranging the first, second and third refrigerant circuits in fluid communication with the refrigerant compressor via the four-way valve, the flow direction within the refrigerant system may be controlled by simply controlling the position of the four-way valve. Hence, the refrigerant compressor may be arranged to direct a flow of pressurized refrigerant in only one direction and where the four-way valve controls the flow direction in the first, second and third refrigerant circuits. A less complicated refrigerant compressor may hence be used in the refrigerant system. Also, service access to the refrigerant compressor may be simplified by arranging the refrigerant compressor external to the refrigerant bulkhead.

As described above, the first, second and third refrigerant circuits are integrated in the refrigerant bulkhead. As may be obvious from the below description, this may be construed such that these refrigerant circuits are arranged inside the refrigerant bulkhead. Hence, the first, second and third refrigerant circuits may be construed as respective channels that are arranged inside the refrigerant bulkhead, i.e. integrated in the material of the refrigerant bulkhead. Further, the refrigerant bulkhead may be connected or attached to the firewall structure using any suitable attachment elements, such as e.g. screws, bolts, rivets. A dampening structure may alternatively be arrangement between the refrigerant bulkhead and the firewall structure, such as e.g. elastic bushings.

Optionally in some examples, including in at least one preferred example, the refrigerant compressor is connected to a vibration dampening structure a vehicle cab body of the vehicle cab body. A technical benefit may include that a reduction of vibration propagation may be achieved.

Optionally in some examples, including in at least one preferred example, the vibration dampening structure is a frame of the vehicle cab body. A technical benefit may include that the frame may not propagate vibration into the cabin side of the vehicle cab body. The frame may be of a robust design that can absorb the vibrations caused by the refrigerant compressor. The frame may be the chassis of the vehicle.

Optionally in some examples, including in at least one preferred example, the first, second and third refrigerant circuits are arranged inside the refrigerant bulkhead. A technical benefit may, as indicated above, be that loosely hanging connecting hoses and routing lines can be avoided.

Optionally in some examples, including in at least one preferred example, wherein the refrigerant system further comprises a first refrigerant valve arranged in the first refrigerant circuit, the first refrigerant valve being mounted to the refrigerant bulkhead. A technical benefit may include that the flow of refrigerant in the first refrigerant circuits can be controlled. In detail, the first refrigerant valve can control the flow of refrigerant to either flow in the first refrigerant circuit or prevent the flow of refrigerant to enter the first refrigerant circuit. The first refrigerant valve may be mounted on a surface of the refrigerant bulkhead, preferably to a sealed port connecting the first refrigerant valve to the first refrigerant circuit.

Optionally in some examples, including in at least one preferred example, the refrigerant system further comprises a second refrigerant valve arranged in the second refrigerant circuit, the second refrigerant valve being mounted to the refrigerant bulkhead. A technical benefit may include that the flow of refrigerant in the second refrigerant circuits can be controlled. In detail, the second refrigerant valve can control the flow of refrigerant to either flow in the second refrigerant circuit or prevent the flow of refrigerant to enter the second refrigerant circuit. The second refrigerant valve may be mounted on a surface of the refrigerant bulkhead, preferably to a sealed port connecting the second refrigerant valve to the second refrigerant circuit.

Optionally in some examples, including in at least one preferred example, the refrigerant system further comprises a third refrigerant valve arranged in the third refrigerant circuit, the third refrigerant valve being mounted to the refrigerant bulkhead. A technical benefit may include that the flow of refrigerant in the third refrigerant circuits can be controlled. In detail, the third refrigerant valve can control the flow of refrigerant to either flow in the third refrigerant circuit or prevent the flow of refrigerant to enter the third refrigerant circuit. The third refrigerant valve may be mounted on a surface of the refrigerant bulkhead, preferably to a sealed port connecting the third refrigerant valve to the third refrigerant circuit.

Optionally in some examples, including in at least one preferred example, the refrigerant system further comprises a fourth refrigerant circuit arranged in fluid communication with the refrigerant compressor via the four-way valve, and a fourth refrigerant valve arranged in the fourth refrigerant circuit, the fourth refrigerant valve being arranged mounted to the refrigerant bulkhead. A technical benefit may include that an additional component or compartment can be thermally controlled by the flow of refrigerant in the fourth refrigerant circuit. By providing a fourth refrigerant circuit with a fourth refrigerant valve, the flow of refrigerant from the refrigerant compressor to the fourth refrigerant circuit can be controlled. In detail, the fourth refrigerant valve can control the flow of refrigerant to either flow in the fourth refrigerant circuit or prevent the flow of refrigerant to enter the fourth refrigerant circuit. The fourth refrigerant circuit may, in a similar vein as the above described first, second and third refrigerant circuits, be integrated to the refrigerant bulkhead, thereby achieving the above described technical advantages associated with integrated refrigerant circuits. The fourth refrigerant valve may be mounted on a surface of the refrigerant bulkhead, preferably to a sealed port connecting the fourth refrigerant valve to the fourth refrigerant circuit.

Optionally in some examples, including in at least one preferred example, the vehicle cab body further comprising a first heat exchanger arranged in the first refrigerant circuit, the first heat exchanger being mounted to the refrigerant bulkhead and faces the engine side of the vehicle cab body. A technical benefit may include that the refrigerant in the first refrigerant circuit can be utilized for thermal management with another component outside, preferably on the engine side, of the refrigerant system. The first heat exchanger may be mounted on a surface of the refrigerant bulkhead, preferably to a sealed port connecting the first heat exchanger to the first refrigerant circuit.

Optionally in some examples, including in at least one preferred example, the vehicle cab body further comprising a second heat exchanger arranged in the second refrigerant circuit, the second heat exchanger being mounted to the refrigerant bulkhead and faces the engine side of the vehicle cab body. A technical benefit may include that the refrigerant in the second refrigerant circuit can be utilized for thermal management with another component outside, preferably on the engine side, of the refrigerant system. The second heat exchanger may be mounted on a surface of the refrigerant bulkhead, preferably to a sealed port connecting the second heat exchanger to the second refrigerant circuit.

Optionally in some examples, including in at least one preferred example, the vehicle cab body further comprising a third heat exchanger arranged in the third refrigerant circuit, the third heat exchanger being mounted to the refrigerant bulkhead and faces the engine side of the vehicle cab body. A technical benefit may include that the refrigerant in the third refrigerant circuit can be utilized for thermal management with another component outside, preferably on the engine side, of the refrigerant system. The third heat exchanger may be mounted on a surface of the refrigerant bulkhead, preferably to a sealed port connecting the third heat exchanger to the third refrigerant circuit.

Optionally in some examples, including in at least one preferred example, the vehicle cab body further comprising a fourth heat exchanger arranged in the fourth refrigerant circuit, the fourth heat exchanger being mounted to the refrigerant bulkhead and faces the cab side of the vehicle cab body. A technical benefit may include that the refrigerant in the fourth refrigerant circuit can be utilized for thermal management with another component outside, preferably on the cab side, of the refrigerant system. The fourth heat exchanger may be mounted on a surface of the refrigerant bulkhead, preferably to a sealed port connecting the fourth heat exchanger to the fourth refrigerant circuit.

Optionally in some examples, including in at least one preferred example, the vehicle thermal system further comprising a coolant system, the coolant system comprising a first coolant circuit connected to a vehicle battery system, the first coolant circuit being thermally connected to the first refrigerant circuit. A technical benefit may include that refrigerant in the first refrigerant circuit can be used for thermal management of the vehicle battery system. Alternatively or additionally, heat from the battery system can be used for warming/cooling the refrigerant in the first refrigerant circuit, and in turn control thermal management of the refrigerant system.

Optionally in some examples, including in at least one preferred example, the first coolant circuit is thermally connected to the first refrigerant circuit via the first heat exchanger. A technical benefit may include that the first refrigerant circuit and the first coolant circuit can be arranged in non-fluid communication with each other and instead thermally connected to each other via the first heat exchanger.

Optionally in some examples, including in at least one preferred example, the coolant system comprising a second coolant circuit connected to a radiator configured to receive ambient air, the second coolant circuit being thermally connected to the second refrigerant circuit. A technical benefit may include that refrigerant in the second refrigerant circuit can be used for thermal management with the radiator. Hence, heating or cooling by use of ambient air through the radiator can be used for controlling the temperature of the refrigerant in the second refrigerant circuit, and thus for thermal management of the refrigerant system.

Optionally in some examples, including in at least one preferred example, the second coolant circuit is thermally connected to the second refrigerant circuit via the second heat exchanger. A technical benefit may include that the second refrigerant circuit and the second coolant circuit can be arranged in non-fluid communication with each other and instead thermally connected to each other via the second heat exchanger.

Optionally in some examples, including in at least one preferred example, the coolant system comprising a third coolant circuit connected to a vehicle electric system, the third coolant circuit being thermally connected to the third refrigerant circuit. A technical benefit may include that refrigerant in the third refrigerant circuit can be used for thermal management of the vehicle electric system. Alternatively or additionally, heat from the vehicle electric system can be used for warming/cooling the refrigerant in the third refrigerant circuit, and in turn control thermal management of the refrigerant system.

Optionally in some examples, including in at least one preferred example, the third coolant circuit is thermally connected to the third refrigerant circuit via the third heat exchanger. A technical benefit may include that the third refrigerant circuit and the third coolant circuit can be arranged in non-fluid communication with each other and instead thermally connected to each other via the third heat exchanger.

Optionally in some examples, including in at least one preferred example, the refrigerant bulkhead is arranged at a transversal center position of the firewall structure. As indicated above, a technical benefit may include that the vehicle thermal system can be arranged at the same position for both right-hand-drive vehicles as well as for left-hand-drive vehicles.

According to a second aspect, there is provided a vehicle, comprising a vehicle cab body according to any one of the examples described above in relation to the first aspect.

Effects and features of the second aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary vehicle thermal system according to an example, and
Fig. 3 is an exemplary front view illustration of a portion of a vehicle cab body of the vehicle in Fig. 1 according to an example.

### DETAILED DESCRIPTION

The detailed description set forth below provides information and examples of the disclosed technology with sufficient detail to enable those skilled in the art to practice the disclosure.

The following disclosure aims at improving thermal control as well as to provide a vehicle cab body in which a vehicle thermal system for such improved thermal control is connected to the vehicle cab body in a compact and simplified manner with the use of less number of components while still obtaining a desired functionality.

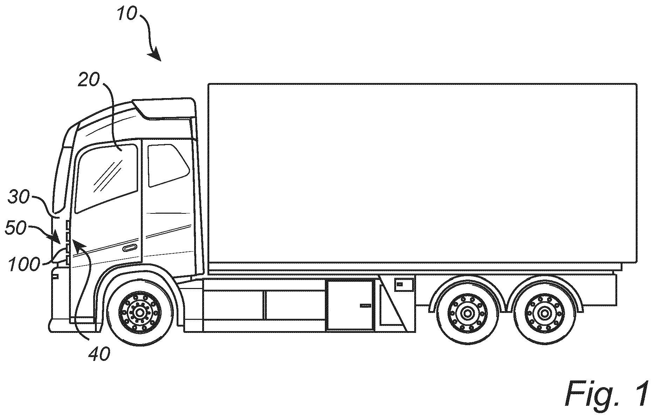

With reference to Fig. 1, which is an exemplary illustration of a vehicle 10 according to an example. The vehicle 10 comprises a vehicle cab body 20 in which an operator of the vehicle 10 can control and operate the vehicle 10. The vehicle 10 is preferably propelled at least by an electric traction motor (not shown). The vehicle 10 can thus be a so called battery electric vehicle (BEV). However, the vehicle may in addition comprise an internal combustion engine (not shown) and is in such case a so called hybrid electric vehicle (HEV). The vehicle 10 may also comprise a fuel cell arranged to generate electric energy whereby the vehicle 10 is a so called fuel cell electric vehicle (FCEV). In any of these alternatives, the vehicle 10 comprises a vehicle battery system, a radiator and a vehicle electric system. Further, the vehicle cab body 20 comprises a firewall structure 30. The firewall structure 30 is dividing the vehicle cab body 20 into a cabin side 40 and an engine side 50. In further detail, the engine, i.e. the electric traction motor as well as components associated to the electric traction motor are positioned on one side of the firewall structure, i.e. on the engine side 50, while the compartment at which the operator is sitting is positioned on the other side of the firewall structure, i.e. on the cabin side 40. The systems and components on each side of the cabin side 40 and the engine side 50 need thermal control for efficient operation. The vehicle 10 therefore comprises a vehicle thermal system 100 which will in the following be described in further detail.

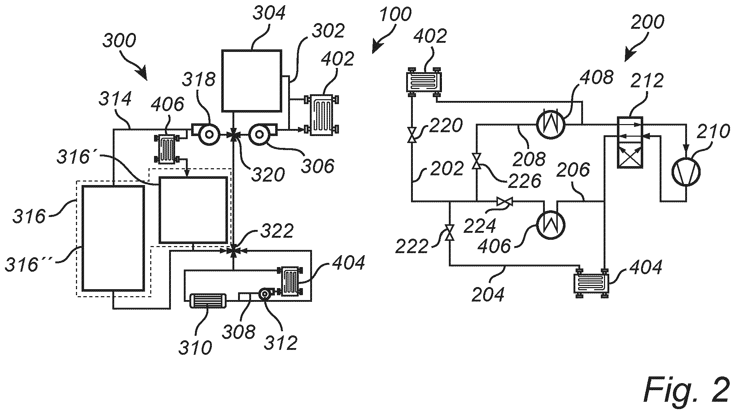

Reference is now made to Fig. 2 which is an exemplary schematic illustration of the vehicle thermal system 100 according to an example. The exemplified vehicle thermal system 100 comprises a refrigerant system 200 as well as a coolant system 300. The refrigerant system 200 as well as the coolant system 300 are both closed-loop systems, where the refrigerant system 200 contains a refrigerant that cycles through the refrigerant system 200, while the coolant system 300 contains a coolant, preferably a liquid coolant, that circulates the coolant system 300. The coolant will in the following merely be referred to as a fluid.

The refrigerant system 200 comprises a refrigerant compressor 210 that is arranged to circulate the refrigerant in the refrigerant system 200. In the exemplification depicted in Fig. 2, the refrigerant compressor 210 directs the flow of refrigerant in a single direction and the flow direction of refrigerant in the refrigerant system 200 is instead controlled by a four-way valve 212 of the refrigerant system 200. In further detail, the four-way valve 212 can be arranged in a first position as indicated in Fig. 2, and in a second position in which the refrigerant is flowing in an opposite direction in the refrigerant system 200 compared to when the four-way valve 212 assumes the first position.

Turning to the coolant system 300, which comprises a first coolant circuit 302, a second coolant circuit 308 and a third coolant circuit 314. The first 302, second 308 and third 314 coolant circuits are arranged in fluid communication with each other. The first coolant circuit 302 comprises a first fluid pump 306 arranged to control and pump a flow of fluid in the first coolant circuit 302. The first coolant circuit 302 is connected to a vehicle battery system 304. The vehicle battery system 304 preferably comprises one or more traction batteries provided with one or more battery cells. The flow of fluid in the first coolant circuit 302 can thus control a temperature of the battery system 304.

The second coolant circuit 308 comprises a second fluid pump 312 arranged to control and pump a flow of fluid in the second coolant circuit 308. The second coolant circuit 308 is connected to a radiator 310. The radiator 310 is arranged to receive ambient air. Hence, the temperature level of the liquid in the second coolant circuit 308 can be controlled or affected by the ambient temperature.

The third coolant circuit 314 comprises a third fluid pump 318 arranged to control and pump a flow of fluid in the third coolant circuit 314. The third coolant circuit 314 is connected to a vehicle electric system 316. The third coolant circuit 314 is thus arranged to thermally control the vehicle electric system 316. The vehicle electric system 316 may, for example, comprise the electric traction motor arranged to propel the vehicle, one or more battery charger, an electric motor fan, etc.

Moreover, the coolant system 300 also comprises a first coolant valve 320 and a second coolant valve 322. The first 320 and second 322 coolant valves are controllable to direct the fluid inside the coolant system 300 to thermally control the batter system 304 and/or the vehicle electric system 316 depending on various thermal conditions and prerequisites as will be described in further detail below. In further detail, the first coolant valve 320 is connected to the first 302 and third 314 coolant circuits, while the second coolant valve 322 is connected to the second 308 and third 314 coolant circuits. The vehicle thermal system 100 can hereby be controlled in a number of various operating modes by e.g. controlling the first 320 and second 322 coolant valves, of which some of these mode will be described in further detail below.

Further, and as illustrated in Fig. 2, the vehicle thermal system 100 also comprises a first heat exchanger 402, a second heat exchanger 404 and a third heat exchanger 406. Each of the first 402, second 404 and third 406 heat exchangers are connected between the refrigerant system 200 and the coolant system 300. In particular, the first heat exchanger 402 is arranged in the first coolant circuit 302 and in the first refrigerant circuit 202. Hereby, the first coolant circuit 302 and the first refrigerant circuit 202 can exchange heat with each other. The second heat exchanger 404 is arranged in the second coolant circuit 308 and in the second refrigerant circuit 204. Hereby, the second coolant circuit 308 and the second refrigerant circuit 204 can exchange heat with each other. The third heat exchanger 406 is arranged in the third coolant circuit 314 and in the third refrigerant circuit 206. Hereby, the third coolant circuit 314 and the third refrigerant circuit 206 can exchange heat with each other.

In the example depicted in Fig. 2, the refrigerant system 200 also comprises a fourth heat exchanger 408. The fourth heat exchanger 408 arranged in the fourth refrigerant circuit 208. The fourth heat exchanger 408 may be connected to the vehicle cab 20 to thermally control the interior of the vehicle cab 20. The first 402 and fourth 408 heat exchangers may be arranged in parallel with each other in the refrigerant system 200. Hence, the first 202 and fourth 208 refrigerant conduits are arranged as parallel refrigerant conduits. In a similar vein, the second 404 and third 406 heat exchangers may be arranged in parallel with each other in the refrigerant system 200, i.e. the second 204 and third 206 refrigerant conduits may be arranged in parallel with each other.

Referring again to the refrigerant system, and as illustrated in Fig. 2, the refrigerant system comprises a first refrigerant valve 220, a second refrigerant valve 222, a third refrigerant valve 224 and a fourth refrigerant valve 226. In particular, the first refrigerant valve 220 is arranged in the first refrigerant circuit 202. The first refrigerant valve 220 is arranged to control a flow of refrigerant in the first heat exchanger 402. Thus, when the first refrigerant valve 220 is arranged in an open position, refrigerant flows into the first heat exchanger 402. When the first refrigerant valve 220 is arranged in a closed position, refrigerant does not flow into the first heat exchanger 402. The above described processing circuitry 702 is configured to control the first 220, second 222, third 224 and fourth 226 refrigerant valves. Each of the refrigerant valves 220, 222, 224 and 226 may also be configured to assume a third, pulsating state in which each of the refrigerant valves are pulsating between the closed and open position to operate as an expansion valve.

The second refrigerant valve 222 is arranged in the second refrigerant circuit 204. The second refrigerant valve 222 is arranged to control a flow of refrigerant in the second heat exchanger 404. Thus, when the second refrigerant valve 222 is arranged in an open position, refrigerant flows into the second heat exchanger 404. When the second refrigerant valve 222 is arranged in a closed position, refrigerant does not flow into the second heat exchanger 404.

The third refrigerant valve 224 is arranged in the third refrigerant circuit 206. The third refrigerant valve 224 is arranged to control a flow of refrigerant in the third heat exchanger 406. Thus, when the third refrigerant valve 224 is arranged in an open position, refrigerant flows into the third heat exchanger 406. When the third refrigerant valve 224 is arranged in a closed position, refrigerant does not flow into the third heat exchanger 406.

Finally, the fourth refrigerant valve 226 is arranged in the fourth refrigerant circuit 208. The fourth refrigerant valve 226 is arranged to control a flow of refrigerant in the fourth heat exchanger 408. Thus, when the fourth refrigerant valve 226 is arranged in an open position, refrigerant flows into the fourth heat exchanger 408. When the fourth refrigerant valve 226 is arranged in a closed position, refrigerant does not flow into the fourth heat exchanger 408.

Moreover, in the coolant system 300 depicted in Fig. 2, the vehicle electric system 316 comprises a first vehicle electric system 316' and a second vehicle electric system 316" arranged in parallel with each other. The third heat exchanger 406 is arranged in fluid communication between the third fluid pump 318 and the first vehicle electric system 316', while the second vehicle electric system 316" is arranged in fluid communication between the third fluid pump 318 and the second coolant valve 322. The first vehicle electric system 316' may comprise a number of electrical vehicle components such as e.g. an air compressor, DC/DC converter(s), etc. The second vehicle electric system 316" may comprise a number of electric motor systems, such as e.g. one or more capacitors, the electric traction motor(s), charger, etc.

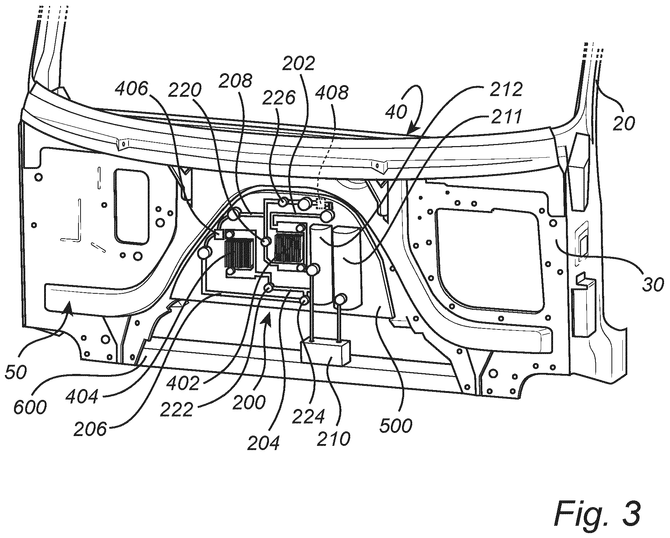

Reference is first made to Fig. 3 in order to describe the vehicle thermal system 100 and its position in the vehicle cab body 20. In particular, Fig. 3 illustrates a portion of the vehicle cab body 20, and in particular the firewall structure 30 arranged therein according to an example. As described above, the firewall structure 30 divides the vehicle cab body 20 into the cabin side 40 and the engine side 50. The firewall structure 30 is thus in Fig. 3 seen from the engine side 50. As can be seen in Fig. 3, the vehicle cab body 20 comprises a refrigerant bulkhead 500. The refrigerant bulkhead 50 is connected to the firewall structure 30. In particular, the refrigerant bulkhead 50 is arranged in a transversal center position of the firewall structure 30 which is an open space conventionally arranged to make space for an internal combustion engine for vehicles propelled by such traction motor. The refrigerant bulkhead 500 may be attached to the firewall structure by e.g. bolts, screws, poppets, etc. Also, a vibration dampers, such as e.g. elastic bushings, may be arranged between the refrigerant bulkhead 500 and the firewall structure 30.

As is further depicted in Fig. 3, the refrigerant system 200 is forming part of the refrigerant bulkhead 500. In particular, and as will be described below, components of the refrigerant system 200 described above may be either mounted to the refrigerant bulkhead 500 or integrated in the refrigerant bulkhead 500.

In particular, and as described above, the exemplified refrigerant system 200 comprises the refrigerant compressor 210, the four-way valve 212, the first 202, second 204, third 206 and fourth 208 refrigerant circuits, as well as the first 220, second 222, third 224 and fourth 224 refrigerant valves. In addition, the exemplified refrigerant system 200 also comprises a dryer/accumulator 211. Each of the first 202, second 204, third 206 and fourth 208 refrigerant circuits is integrated in the refrigerant bulkhead 500. In detail, the first 202, second 204, third 206 and fourth 208 refrigerant circuits are arranged inside the material defining a thickness of the refrigerant bulkhead 500 between the surfaces facing the respective cabin side 40 and the engine side 50. The first 220, second 222, third 224 and fourth 226 refrigerant valves on the other hand are mounted to the refrigerant bulkhead 500 on the engine side 50. In particular, the first 220, second 222, third 224 and fourth 226 refrigerant valves may be mounted to a respective port which is arranged on the engine side 50 of the bulkhead 500. Further, the above described four-way valve 212 is also mounted to the refrigerant bulkhead 500 on the engine side 50. The four-way valve 212 comprises ports connecting the four-way valve 212 to the refrigerant compressor 210. The refrigerant compressor 210 is in turn arranged external to the refrigerant bulkhead 500. In the example depicted in Fig. 3, the refrigerant compressor is connected to a vibration dampening structure 600 of the vehicle cab body 20, which vibration dampening structure 600 is exemplified as the frame of the vehicle cab body.

Furthermore, the first heat exchanger 402, the second heat exchanger 404, the third heat exchanger 406 and the fourth heat exchanger 408 are each mounted to the refrigerant bulkhead 500. In particular, the first heat exchanger 402 is mounted to the refrigerant bulkhead 500 and face the engine side 50 of the vehicle cab body 20. The second heat exchanger 404 is mounted to the refrigerant bulkhead 500 and face the engine side 50 of the vehicle cab body 20. The third heat exchanger 406 is mounted to the refrigerant bulkhead 500 and face the engine side 50 of the vehicle cab body 20. The fourth heat exchanger 408 on the other hand, which is depicted in dashed lines, is mounted to the refrigerant bulkhead 500 but faces the cabin side 40 of the vehicle cab body 20.

The above described vehicle battery system 304, the vehicle electric system 316 and the radiator 310 may advantageously be arranged on the engine side 50 of the vehicle cab body 20. The specific connection of the coolant system 300 to the vehicle cab body 20 has not been described or illustrated. It should however be understood that the coolant system, or parts thereof, may be mounted to the refrigerant bulkhead. The coolant system 300, and all the above described associated components thereof, may alternatively be arranged external refrigerant bulkhead. The components associated with the above described coolant system 300 may be arranged on either of the cabin side 40 and the engine side 50 of the vehicle cab body 20.

### EXAMPLE LIST

Example 1. A vehicle cab body, comprising a firewall structure dividing the vehicle cab body into a cabin side and an engine side, the vehicle cab body comprising a vehicle thermal system, comprising a refrigerant system, comprising a first refrigerant circuit, a second refrigerant circuit, a third refrigerant circuit, a refrigerant compressor, and a four-way valve, wherein each one of the first, second and third refrigerant circuits is arranged in fluid communication with the refrigerant compressor via the four-way valve, and a refrigerant bulkhead connected to the firewall structure, wherein the first refrigerant circuit, the second refrigerant circuit, and the third refrigerant circuit are integrated in the refrigerant bulkhead, the four-way valve being mounted to the refrigerant bulkhead on the engine side, and wherein the refrigerant compressor is arranged external to the refrigerant bulkhead.

Example 2. The vehicle cab body of example 1, wherein the refrigerant compressor is connected to a vibration dampening structure of the vehicle cab body.

Example 3. The vehicle cab body of example 2, wherein the vibration dampening structure is a frame of the vehicle cab body.

Example 4. The vehicle cab body of any one of the preceding examples, wherein the first, second and third refrigerant circuits are arranged inside the refrigerant bulkhead.

Example 5. The vehicle cab body of any one of the preceding examples, wherein the refrigerant system further comprises a first refrigerant valve arranged in the first refrigerant circuit, the first refrigerant valve being mounted to the refrigerant bulkhead.

Example 6. The vehicle cab body of any one of the preceding examples, wherein the refrigerant system further comprises a second refrigerant valve arranged in the second refrigerant circuit, the second refrigerant valve being mounted to the refrigerant bulkhead.

Example 7. The vehicle cab body of any one of the preceding examples, wherein the refrigerant system further comprises a third refrigerant valve arranged in the third refrigerant circuit, the third refrigerant valve being mounted to the refrigerant bulkhead.

Example 8. The vehicle cab body of any one of the preceding examples, wherein the refrigerant system further comprises a fourth refrigerant circuit arranged in fluid communication with the refrigerant compressor via the four-way valve, and a fourth refrigerant valve arranged in the fourth refrigerant circuit, the fourth refrigerant valve being arranged mounted to the refrigerant bulkhead.

Example 9. The vehicle cab body of any one of the preceding examples, further comprising a first heat exchanger arranged in the first refrigerant circuit, the first heat exchanger being mounted to the refrigerant bulkhead and faces the engine side of the vehicle cab body.

Example 10. The vehicle cab body of any one of the preceding examples, further comprising a second heat exchanger arranged in the second refrigerant circuit, the second heat exchanger being mounted to the refrigerant bulkhead and faces the engine side of the vehicle cab body.

Example 11. The vehicle cab body of any one of the preceding examples, further comprising a third heat exchanger arranged in the third refrigerant circuit, the third heat exchanger being mounted to the refrigerant bulkhead and faces the engine side of the vehicle cab body.

Example 12. The vehicle cab body of example 8, further comprising a fourth heat exchanger arranged in the fourth refrigerant circuit, the fourth heat exchanger being mounted to the refrigerant bulkhead and faces the cab side of the vehicle cab body.

Example 13. The vehicle cab body of any one of the preceding examples, wherein the vehicle thermal system further comprising a coolant system, the coolant system comprising a first coolant circuit connected to a vehicle battery system, the first coolant circuit being thermally connected to the first refrigerant circuit.

Example 14. The vehicle cab body of example 13 when dependent on example 9, wherein the first coolant circuit is thermally connected to the first refrigerant circuit via the first heat exchanger.

Example 15. The vehicle cab body of any one of examples 13 or 14, wherein the coolant system comprising a second coolant circuit connected to a radiator configured to receive ambient air, the second coolant circuit being thermally connected to the second refrigerant circuit.

Example 16. The vehicle cab body of example 15 when dependent on example 10, wherein the second coolant circuit is thermally connected to the second refrigerant circuit via the second heat exchanger.

Example 17. The vehicle cab body of any one of examples 13 - 16, wherein the coolant system comprising a third coolant circuit connected to a vehicle electric system, the third coolant circuit being thermally connected to the third refrigerant circuit.

Example 18. The vehicle cab body of example 17 when dependent on example 11, wherein the third coolant circuit is thermally connected to the third refrigerant circuit via the third heat exchanger.

Example 19. The vehicle cab body of any one of the preceding examples, wherein the refrigerant bulkhead is arranged at a transversal center position of the firewall structure.

Example 20. A vehicle, comprising a vehicle cab body according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle cab body, comprising a firewall structure dividing the vehicle cab body into a cabin side and an engine side, the vehicle cab body comprising:
- a vehicle thermal system, comprising a refrigerant system, comprising:
- a first refrigerant circuit (202), a second refrigerant circuit (204), a third refrigerant circuit (206), a refrigerant compressor (210), and a four-way valve (212), wherein each one of the first (202), second (204) and third (206) refrigerant circuits is arranged in fluid communication with the refrigerant compressor (210) via the four-way valve, and
- a refrigerant bulkhead connected to the firewall structure, wherein the first refrigerant circuit (202), the second refrigerant circuit (204), and the third refrigerant circuit (206) are integrated in the refrigerant bulkhead, the four-way valve (212) being mounted to the refrigerant bulkhead on the engine side, and wherein the refrigerant compressor (210) is arranged external to the refrigerant bulkhead.

2. The vehicle cab body of claim 1, wherein the refrigerant compressor is connected to a frame of the vehicle cab body.

3. The vehicle cab body of any one of the preceding claims, wherein the refrigerant system further comprises a first refrigerant valve (220) arranged in the first refrigerant circuit (202), the first refrigerant valve (220) being mounted to the refrigerant bulkhead.

4. The vehicle cab body of any one of the preceding claims, wherein the refrigerant system (200) further comprises a second refrigerant valve (222) arranged in the second refrigerant circuit (204), the second refrigerant valve being mounted to the refrigerant bulkhead.

5. The vehicle cab body of any one of the preceding claims, wherein the refrigerant system (200) further comprises a third refrigerant valve (224) arranged in the third refrigerant circuit (206), the third refrigerant valve being mounted to the refrigerant bulkhead.

6. The vehicle cab body of any one of the preceding claims, wherein the refrigerant system (200) further comprises a fourth refrigerant circuit (208) arranged in fluid communication with the refrigerant compressor (210) via the four-way valve (212), and a fourth refrigerant valve (226) arranged in the fourth refrigerant circuit (208), the fourth refrigerant valve being arranged mounted to the refrigerant bulkhead.

7. The vehicle cab body of any one of the preceding claims, further comprising a first heat exchanger (402) arranged in the first refrigerant circuit, the first heat exchanger being mounted to the refrigerant bulkhead and faces the engine side of the vehicle cab body.

8. The vehicle cab body of any one of the preceding claims, further comprising a second heat exchanger (404) arranged in the second refrigerant circuit, the second heat exchanger being mounted to the refrigerant bulkhead and faces the engine side of the vehicle cab body.

9. The vehicle cab body of any one of the preceding claims, further comprising a third heat exchanger (406) arranged in the third refrigerant circuit, the third heat exchanger being mounted to the refrigerant bulkhead and faces the engine side of the vehicle cab body.

10. The vehicle cab body of claim 6, further comprising a fourth heat exchanger (408) arranged in the fourth refrigerant circuit, the fourth heat exchanger being mounted to the refrigerant bulkhead and faces the cab side of the vehicle cab body.

11. The vehicle cab body of any one of the preceding claims, wherein the vehicle thermal system further comprising a coolant system (300), the coolant system (300) comprising a first coolant circuit connected to a vehicle battery system, the first coolant circuit being thermally connected to the first refrigerant circuit.

12. The vehicle cab body of claim 11 when dependent on claim 7, wherein the first coolant circuit is thermally connected to the first refrigerant circuit via the first heat exchanger.

13. The vehicle cab body of any one of claims 11 or 12, wherein the coolant system (300) comprising a second coolant circuit connected to a radiator configured to receive ambient air, the second coolant circuit being thermally connected to the second refrigerant circuit.

14. The vehicle cab body of any one of the preceding claims, wherein the refrigerant bulkhead is arranged at a transversal center position of the firewall structure.

15. A vehicle, comprising a vehicle cab body according to any one of the preceding claims.
